# EUROPEAN PATENT SPECIFICATION

(11) **EP 3 247 073 B1**
(45) Date of publication and mention of the grant of the patent: **06.01.2021**
(21) Application number: 15877590.8
(22) Date of filing: 27.07.2015
(51) Int. Cl.: H04L 12/24

(54) **ALARM PROCESSING METHOD AND DEVICE**
ALARMVERARBEITUNGSVERFAHREN UND -VORRICHTUNG
PROCÉDÉ ET DISPOSITIF DE TRAITEMENT D'ALARME

(30) Priority: 16.01.2015 CN 201510024214
(43) Date of publication of application: 22.11.2017
(73) Proprietor: ZTE Corporation, Shenzhen, Guangdong 518057 (CN)
(72) Inventor: ZHU, Weihong, Shenzhen Guangdong 518057 (CN); XIAO, Weijin, Shenzhen Guangdong 518057 (CN)
(74) Representative: Mozzi, Matteo
(86) International application number: PCT/CN2015/085229
(87) International publication number: WO 2016/112676

(56) References cited:
- CN-A- 104 170 323
- CN-A- 104 253 866
- US-A1- 2009 158 098
- US-A1- 2010 332 889
- "Network Functions Virtualisation (NFV); Management and Orchestration", GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. NFV MAN, no. V1.1.1, 1 December 2014 (2014-12-01), XP014235740,
- "Network Functions Virtualisation (NFV); Resiliency Requirements", GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. NFV REL, no. V1.1.1, 1 January 2015 (2015-01-01), XP014235737,

## Description

### Technical Field

The disclosure relates to the field of communications, and more particularly, to alarm processing methods and systems.

### Background

In a field of management of a wireless communication system, an interface between a Network Management System (NMS) and an Element Management System (EMS) may be called as a northbound interface (Itf-N). The EMS mainly implements an Element Management Layer (EML) function in International Telecommunication Union (ITU) Telecommunications Management Network (TMN), that is, implements a management function for one or more mobile communication equipment. Generally, different equipment suppliers cannot share the same EMS. The NMS mainly implements a Network Management Layer (NML) function in the ITU TMN, and is responsible for the management of all network elements in a managed network. When there are multiple equipment suppliers in the managed network (also referred to as a sub-network), the management of the entire sub-network may be achieved by means of the management via respective EMSs of the multiple equipment suppliers.

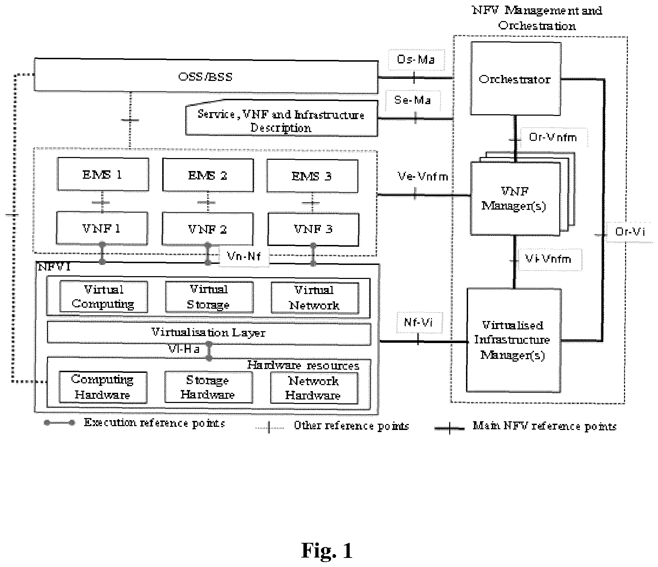

Currently, in order to improve the flexibility of a communication network and reduce the management cost, a Network Functions Virtualization (NFV) concept is put forward by operators. When the NFV technology is used, original physical network element equipment is replaced by a Virtualized Network Function (VNF), so that the network function is decoupled from specific hardware. Fig. 1 is a diagram showing the architecture of network functions virtualization. As shown in Fig. 1, the architecture involves structures including: NFV management and orchestration; an orchestrator; a service, VNF and infrastructure description; a VMF manager; a virtualized infrastructure manager; virtual computing; virtual storage; a virtual network; a virtualization layer; computing hardware; storage hardware; network hardware; execution reference points; other reference points; and main NFV reference points. The VNF is isolated from a Network Functions Virtualization Infrastructure (NFVI) of a bottom layer. Under such a circumstance, the NFVI of the bottom layer is a brand-new portion relative to original network architecture and therefore cannot be managed by the EMS at present. However, as the VNF is operated on a virtual machine provided by the NFVI, when a related resource in the NFVI has a failure, such failure is possible to have an impact on a VNF instance currently being executed. To repair an NFVI layer failure (for example, a virtual resource pool failure) having the impact on the VNF instance as soon as possible, the EMS may need to known the situation of the failure, namely to receive alarm information of the related failure. However, no method which can receive and explicitly identify an alarm correlated to a VNF instance generated due to the virtual resource pool failure of the NFVI layer has been presented.

Therefore, there exists a problem that the EMS cannot identify the alarm correlated to a VNF instance and generated due to the virtual resource pool failure of the NFVI layer

Standard document ETSI GS NFV-MAN 001 V1.1.1 (2014-12) on Network Functions Virtualisation (NFV), XP014235740, describes the management and orchestration framework required for the provisioning of virtualised network functions. In Annex A.2 a Network Service Fault Management Case Study is presented.

Standard document ETSI GS NFV-REL 001 V1.1.1 (2015-01) on Network Functions Virtualisation (NFV), XP014235737, describes aspects related to network and service resiliency in a virtualised network environment.

### Summary

Some embodiments of the disclosure provide alarm processing methods and systems, which may at least solve the problem that the EMS cannot identify the alarm correlated to a VNF instance and generated due to the virtual resource pool failure of the NFVI layer.

The invention is defined in the independent claims as appended. Advantageous aspects are defined in the dependent claims. By virtue of the solution of some embodiments, the problem that the EMS cannot identify the alarm correlated to a VNF instance and generated due to the virtual resource pool failure of the NFVI layer is solved. The effect that the EMS can explicitly identify the alarm correlated to a VNF instance and generated due to the virtual resource pool failure of the NFVI layer is achieved.

### Brief Description of the Drawings

Fig. 1 is a diagram showing the architecture of network functions virtualization;
Fig. 2 is a flowchart of an alarm processing method according to a first embodiment of the disclosure;
Fig. 3 is a flowchart of an alarm processing method according to a second embodiment of the disclosure;
Fig. 4 is a flowchart of an alarm processing method according to a third embodiment of the disclosure;
Fig. 5 is a flowchart of an alarm processing method according to a fourth embodiment of the disclosure;
Fig. 6 is a structure diagram of an alarm processing device according to a first embodiment of the disclosure;
Fig. 7 is a structure diagram of an NFVI entity according to an embodiment of the disclosure;
Fig. 8 is a structure diagram of an alarm processing device according to a second embodiment of the disclosure;
Fig. 9 is a structure diagram of a VIM according to an embodiment of the disclosure;
Fig. 10 is a structure diagram of an alarm processing device according to a third embodiment of the disclosure;
Fig. 11 is a structure diagram of a VNFM according to an embodiment of the disclosure;
Fig. 12 is a structure diagram of an alarm processing device according to a fourth embodiment of the disclosure;
Fig. 13 is a structure diagram of an EMS entity according to an embodiment of the disclosure;
Fig. 14 is a flowchart of a virtual network resource alarm reporting method according to an embodiment of the disclosure.

### Detailed Description of the Embodiments

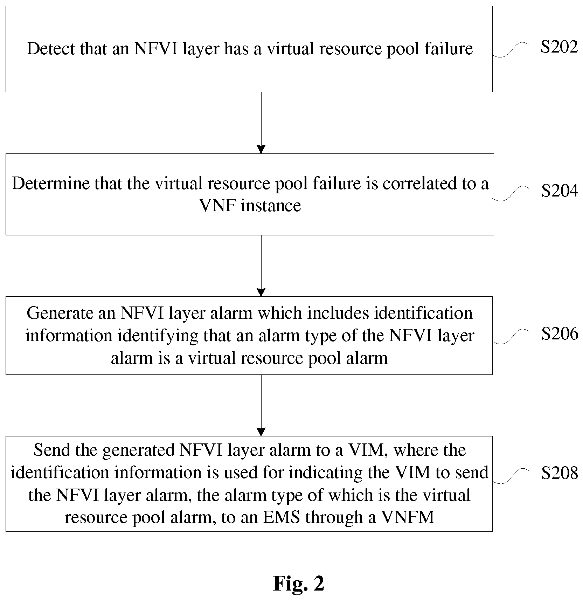

An alarm processing method is provided in an embodiment. Fig. 2 is a flowchart of an alarm processing method according to a first embodiment of the disclosure. As shown in Fig. 2, the alarm processing method includes the following acts.

At act S202, it is detected that an NFVI layer has a virtual resource pool failure.

At act S204, it is determined that the virtual resource pool failure is correlated to a VNF instance.

At act S206, an NFVI layer alarm, which includes identification information identifying that an alarm type of the NFVI layer alarm is a virtual resource pool alarm, is generated.

At act S208, the generated NFVI layer alarm is sent to a VIM. The identification information is used for indicating the VIM to send the NFVI layer alarm, the alarm type of which is the virtual resource pool alarm, to an EMS through a VNFM.

By means of the above acts, after determining that the virtual resource pool failure is correlated to the VNF instance, it may be determined that the virtual resource pool failure of the NFVI layer has an impact on a VNF instance currently being executed. The generated alarm includes the identification information identifying that the alarm type of the alarm is the virtual resource pool alarm, so that the EMS which receives the alarm can identify that a reason for the VNF alarm is the virtual resource pool failure, in other words, the alarm type is the virtual resource pool alarm. The problem that the EMS cannot identify the alarm correlated to a VNF instance and generated due to the virtual resource pool failure of the NFVI layer is solved. The effect that the EMS can explicitly identify the alarm correlated to a VNF instance and generated due to the virtual resource pool failure of the NFVI layer is achieved.

In an exemplary embodiment, the virtual resource pool alarm may include at least one of: a hypervisor (also referred to as virtual machine monitor) alarm, a virtual resource alarm or a physical resource alarm.

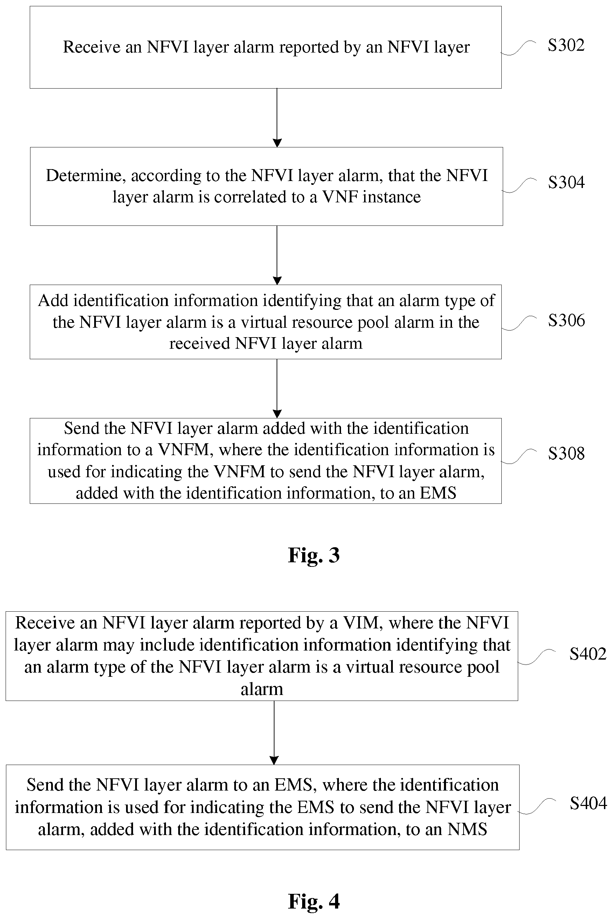

Fig. 3 is a flowchart of an alarm processing method according to a second embodiment of the disclosure. As shown in Fig. 3, the alarm processing method includes the following acts.

At act S302, an NFVI layer alarm reported by an NFVI layer is received.

At act S304, it is determined, according to the NFVI layer alarm, that the NFVI layer alarm is correlated to a VNF instance.

At act 306, identification information identifying that an alarm type of the NFVI layer alarm is a virtual resource pool alarm is added in the received NFVI layer alarm.

At act S308, the NFVI layer alarm added with the identification information is sent to a VNFM. The identification information is used for indicating the VNFM to send the NFVI layer alarm, added with the identification information, to an EMS.

By means of the above acts, after determining that the virtual resource pool failure is correlated to the VNF instance, the identification information identifying that the alarm type of the alarm is the virtual resource pool alarm may be added in the received alarm, so that the EMS which receives the alarm can identify that a reason for the VNF alarm is the virtual resource pool failure, in other words, the alarm type is the virtual resource pool alarm. The problem that the EMS cannot identify the alarm correlated to a VNF instance and generated due to the virtual resource pool failure of the NFVI layer is solved. The effect that the EMS can explicitly identify the alarm correlated to a VNF instance and generated due to the virtual resource pool failure of the NFVI layer is achieved.

In an exemplary embodiment, the virtual resource pool alarm may include at least one of: a hypervisor (also referred to as virtual machine monitor) alarm, a virtual resource alarm or a physical resource alarm.

Fig. 4 is a flowchart of an alarm processing method according to a third embodiment of the disclosure. As shown in Fig. 4, the alarm processing method includes the following acts.

At act S402, an NFVI layer alarm reported by a VIM is received. The NFVI layer alarm may include identification information identifying that an alarm type of the NFVI layer alarm is a virtual resource pool alarm.

At act S404, the NFVI layer alarm is sent to an EMS. The identification information is used for indicating the EMS to send the NFVI layer alarm, added with the identification information, to an NMS.

By means of the above acts, after receiving the alarm which is reported by the VIM and carries the identification information identifying that the alarm type is the virtual resource pool alarm, the alarm may be sent to the EMS, so that the EMS which receives the alarm can identify that a reason for the VNF alarm is the virtual resource pool failure, in other words, the alarm type is the virtual resource pool alarm. The problem that the EMS cannot identify the alarm correlated to a VNF instance and generated due to the virtual resource pool failure of the NFVI layer is solved. The effect that the EMS can explicitly identify the alarm correlated to a VNF instance and generated due to the virtual resource pool failure of the NFVI layer is achieved.

In an exemplary embodiment, the virtual resource pool alarm may include at least one of: a hypervisor (also referred to as virtual machine monitor) alarm, a virtual resource alarm or a physical resource alarm.

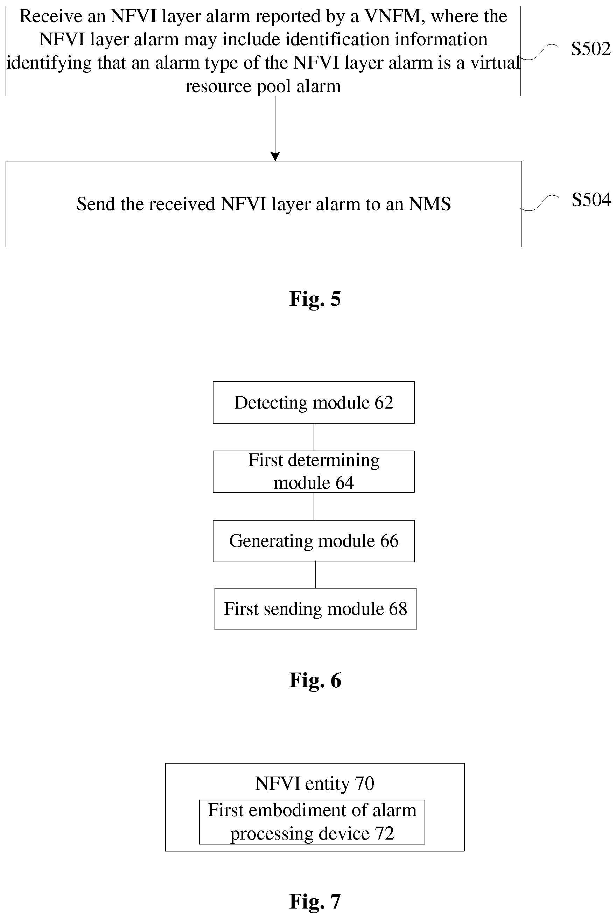

Fig. 5 is a flowchart of an alarm processing method according to a fourth embodiment of the disclosure. As shown in Fig. 5, the alarm processing method includes the following acts.

At act S502, an NFVI layer alarm reported by a VNFM is received. The NFVI layer alarm may include identification information identifying that an alarm type of the NFVI layer alarm is a virtual resource pool alarm.

At act S504, the received NFVI layer alarm is sent to an NMS.

By means of the above acts, after receiving the alarm which is reported by the VNFM and carries the identification information identifying that the alarm type is the virtual resource pool alarm, it may be determined that the alarm is sent due to a virtual resource pool failure, and the alarm may be sent to the NMS, so that the NMS which receives the alarm can identify that a reason for the VNF alarm is the virtual resource pool failure, in other words, the alarm type is the virtual resource pool alarm. The problem that the EMS cannot identify the alarm correlated to a VNF instance and generated due to the virtual resource pool failure of the NFVI layer is solved. The effect that the EMS can explicitly identify the alarm correlated to a VNF instance and generated due to the virtual resource pool failure of the NFVI layer is achieved.

In an exemplary embodiment, the virtual resource pool alarm may include at least one of: a hypervisor (also referred to as virtual machine monitor) alarm, a virtual resource alarm or a physical resource alarm.

Some alarm processing systems comprising devices are provided in the embodiments. The devices are configured to implement the above-mentioned embodiments and the exemplary implementation. With regard to the part that has been described, no further description is provided. As used in the followings, terms "module" can achieve a combination of software and/or hardware with predetermined functions. Although the device described by the following embodiments may be preferably implemented by the software, the device may also be contemplated to be implemented by the hardware or the combination of the software and the hardware.

Fig. 6 is a structure diagram of an alarm processing device which is not part of the invention as claimed. As shown in Fig. 6, the device includes a detecting module 62, a first determining module 64, a generating module 66 and a first sending module 68. The device will be described below.

The detecting module 62 is configured to detect that an NFVI layer has a virtual resource pool failure. The first determining module 64 is coupled to the detecting module 62, and is configured to determine that the virtual resource pool failure is correlated to a VNF instance. The generating module 66 is coupled to the first determining module 64 and is configured to generate an NFVI layer alarm, and the NFVI layer alarm may include identification information identifying that an alarm type of the NFVI layer alarm is a virtual resource pool alarm. The first sending module 68 is coupled to the generating module 66 and is configured to send the generated NFVI layer alarm to a VIM, and the identification information is used for indicating the VIM to send the NFVI layer alarm, the alarm type of which is the virtual resource pool alarm, to an EMS through a VNFM.

Fig. 7 is a structure diagram of an NFVI entity, which is not part of the invention as claimed. As shown in Fig. 7, the VNFM 70 includes the alarm processing device 72 mentioned above.

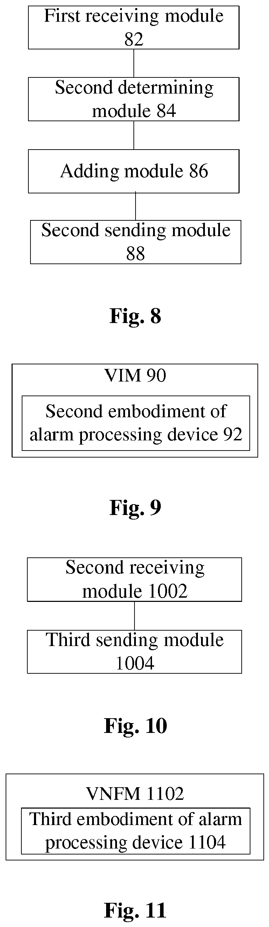

Fig. 8 is a structure diagram of an alarm processing device which is not part of the invention as claimed. As shown in Fig. 8, the device includes a first receiving module 82, a second determining module 84, an adding module 86 and a second sending module 88. The device will be described below

The first receiving module 82 is configured to receive an NFVI layer alarm reported by an NFVI layer. The second determining module 84 is coupled to the first receiving module 82 and is configured to determine, according to the NFVI layer alarm, that the NFVI layer alarm is correlated to a VNF instance. The adding module 86 is coupled to the second determining module 84 and is configured to add identification information identifying that an alarm type of the NFVI layer alarm is a virtual resource pool alarm in the received NFVI layer alarm. The second sending module 88 is coupled to the adding module 86 and is configured to send the NFVI layer alarm added with the identification information to a VNFM, and the identification information is used for indicating the VNFM to send the NFVI layer alarm, added with the identification information, to an EMS.

Fig. 9 is a structure diagram of a VIM which is not part of the invention as claimed. As shown in Fig. 9, the VIM 90 includes the alarm processing device 92 mentioned above.

Fig. 10 is a structure diagram of an alarm processing device which is not part of the invention as claimed. As shown in Fig. 10, the device includes a second receiving module 1002 and a third sending module 1004. The device will be described below.

The second receiving module 1002 is configured to receive an NFVI layer alarm reported by a VIM, and the NFVI layer alarm may include identification information identifying that an alarm type of the NFVI layer alarm is a virtual resource pool alarm. The third sending module 1004 is coupled to the second receiving module 1002 and is configured to send the NFVI layer alarm to an EMS, and the identification information is used for indicating the EMS to send the NFVI layer alarm, added with the identification information, to an NMS.

Fig. 11 is a structure diagram of a VNFM which is not part of the invention as claimed. As shown in Fig. 11, the VNFM 1102 includes the alarm processing device 1104 mentioned above.

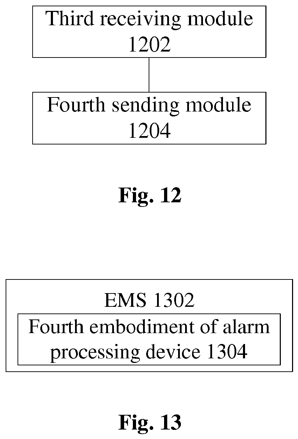

Fig. 12 is a structure diagram of an alarm processing device which is not part of the invention as claimed. As shown in Fig. 12, the device includes a third receiving module 1202 and a fourth sending module 1204. The device will be described below

The third receiving module 1202 is configured to receive an NFVI layer alarm reported by a VNFM, and the NFVI layer alarm may include identification information identifying that an alarm type of the NFVI layer alarm is a virtual resource pool alarm. The fourth sending module 1204 is coupled to the third receiving module 1202 and is configured to send the received NFVI layer alarm to an NMS.

Fig. 13 is a structure diagram of an EMS entity which is not part of the invention as claimed. As shown in Fig. 13, the EMS 1302 includes the alarm processing device 1304 mentioned above.

In the related technology, no method which can enable the EMS to receive and explicitly identify the alarm correlated to a VNF instance and generated due to the virtual resource pool failure of the NFVI layer is provided. A virtual network resource alarm reporting method is provided in the embodiments. By means of increasing a new alarm type and filling out the new alarm type when reporting the alarm, the EMS can receive and explicitly identify the alarm correlated to a VNF instance and generated due to the virtual resource pool failure of the NFVI layer.

The virtual network resource alarm reporting method may generally include the following acts. When an NFVI layer has a virtual resource pool failure, a related alarm is generated and reported to a VIM. The VIM performs analysis on the related alarm and determines whether the alarm is correlated to a VNF instance; if the alarm is not an alarm correlated to a VNF instance, the VIM reports the alarm to a Network Functions Virtualization Orchestrator (NFVO) and the process ends; if the alarm is the alarm correlated to a VNF instance, the VIM reports the alarm to a VNFM. The VNFM sets an alarm type in alarm information to be a virtual resource pool alarm and sends the alarm to an EMS. The VNFM may also perform correlation analysis on the alarm first and then sends the alarm information after the correlation analysis, and alarm type information set to be a virtual resource pool alarm is suggested be included. After receiving the alarm information, the EMS forwards the information to an NMS, and the alarm information includes the alarm type information which is set to be the virtual resource pool alarm.

It should be noted that there is a possibility that all of the VNFM, the EMS, the NFVO and the NMS may perform corresponding alarm association analysis after receiving the alarm information in the above alarm reporting process. The virtual resource pool alarm may be divided into a hypervisor (also referred to as virtual machine monitor) alarm, a virtual resource alarm or a physical resource alarm.

According to the above method, by means of increasing the new alarm type and filling out the new alarm type when reporting the alarm, the EMS can receive and explicitly identify the alarm correlated to a VNF instance and generated due to the virtual resource pool failure of the NFVI layer.

The disclosure is described below with reference to exemplary embodiments.

### First exemplary embodiment

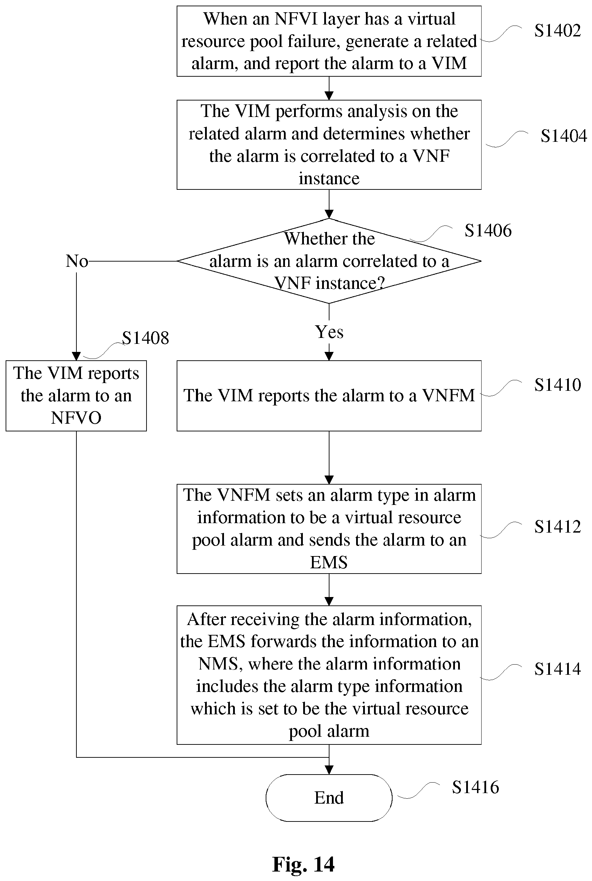

Fig. 14 is a flowchart of a virtual network resource alarm reporting method according to an embodiment of the disclosure. As shown in Fig. 14, the method may include the following acts.

At act S1402, when an NFVI layer has a virtual resource pool failure, a related alarm is generated and reported to a VIM.

At act S1404, the VIM performs analysis on the related alarm and determines whether the alarm is correlated to a VNF instance.

At act S1406, it is judged whether the related alarm is an alarm correlated to a VNF instance, if the related alarm is not an alarm correlated to a VNF instance, act S1408 is executed; or otherwise the act S1410 is executed.

At act S1408, if the alarm is not the alarm correlated to a VNF instance, the VIM may report the alarm to an NFVO, the process ends and act S1416 is executed.

At act S1410, if the alarm is the alarm correlated to a VNF instance, the VIM reports the alarm to a VNFM.

At act S1412, the VNFM sets an alarm type in alarm information to be a virtual resource pool alarm and sends the alarm to the EMS.

At act S1414, after receiving the alarm information, the EMS may forward the information to an NMS, and the alarm information includes alarm type information which is set to be the virtual resource pool alarm.

At act S1416, the flow of the virtual network resource alarm reporting method ends.

### Second exemplary embodiment

A virtual network resource alarm reporting method is provided in the exemplary embodiment, which includes the following acts.

At act S1, when an NFVI layer generates a virtual resource pool failure (a hypervisor failure, a virtual resource failure (such as virtual CPU, virtual storage and virtual network) or a physical resource failure), a related alarm is generated and reported to a VIM. The alarm information may include alarm type information, used for indicating a failure type (such as hypervisor failure, virtual resource failure or physical resource failure) causing the alarm.

At act S2, the VIM performs analysis on the related alarm and determines whether the alarm is correlated to a VNF instance.

At act S3, if the alarm is not the alarm correlated to a VNF instance, the VIM may report the alarm to an NFVO, and the process ends; and if the alarm is the alarm correlated to a VNF instance, the VIM reports the alarm to a VNFM and act S4 is executed.

At act S4, according to the alarm type information in the received alarm information, the VNFM prepares the alarm information to be sent to an EMS. The alarm type in the alarm information may be set to be one of a hypervisor (also referred to as virtual machine monitor) alarm, a virtual resource alarm or a physical resource alarm, and the alarm is sent to the EMS.

At act S5, after receiving the alarm information, the EMS may forward the alarm information to an NMS. The alarm information includes the alarm type information, which may be one of the hypervisor (also referred to as virtual machine monitor) alarm, the virtual resource alarm or the physical resource alarm.

At act S6, the flow of the virtual network resource alarm reporting method ends.

Third exemplary embodiment which is not part of the invention as claimed.

A virtual network resource alarm reporting method is provided in the exemplary embodiment, which includes the following acts.

At act S1, when an NFVI layer has a virtual resource pool failure, a related alarm is generated and reported to a VIM.

At act S2, the VIM performs analysis on the related alarm and determines whether the alarm is correlated to a VNF instance.

At act S3, if the alarm is not an alarm correlated to a VNF instance, the VIM reports the alarm to an NFVO, and the process ends; and if the alarm is the alarm correlated to a VNF instance, the VIM reports the alarm to a VNFM and act S4 is executed.

At act S4, after receiving the alarm, the VNFM first performs correlation analysis on the alarm. If the alarm needs to be sent to an EMS after the correlation analysis, the VNFM sets an alarm type in alarm information to be a virtual resource pool alarm, and sends the alarm to an EMS.

At act S5, after receiving the alarm information, the EMS first performs the correlation analysis on the alarm. If the alarm needs to be sent to an NMS after the correlation analysis, the EMS forwards the alarm information to the NMS. The alarm information may include alarm type information, which may be set to be the virtual resource pool alarm

At act S6, the flow of the virtual network resource alarm reporting method ends.

Fourth exemplary embodimen which is not part of the invention as claimed.

A virtual network resource alarm reporting method is provided in the exemplary embodiment, which includes the following acts.

At act S1, when an NFVI layer has a virtual resource pool failure, a related alarm is generated and the alarm is analyzed. It is determined whether the alarm is correlated to a VNF. A label indicating whether the alarm is correlated to a VNF instance is added in alarm information according to an analysis result, and the alarm is reported to a VIM.

At act S2, after receiving the alarm, the VIM determines a subsequent action according to the label about whether the alarm is correlated to the VNF instance in the alarm information.

At act S3, if the alarm is not an alarm correlated to a VNF instance, the VIM reports the alarm to an NFVO and the process ends; and if the alarm is the alarm correlated to a VNF instance, the VIM reports the alarm to a VNFM and act S4 is executed.

At act S4, the VNFM sets an alarm type in the alarm information to be a virtual resource alarm and sends the alarm to an EMS.

At act S5, after receiving the alarm information, the EMS forwards the alarm information to an NMS. The alarm information includes alarm type information which is set to be the virtual resource alarm.

At act S6, the flow of the virtual network resource alarm reporting method ends.

Apparently, those skilled in the art shall understand that the above modules and acts of the disclosure can be realized by using a general purpose calculating device, can be integrated to one calculating device or distributed on a network which consists of a plurality of calculating devices, and alternatively they can be realized by using the executable program code of the calculating device, so that consequently they can be stored in the storing device and executed by the calculating device, in some cases, can perform the shown or described act in sequence other than herein, or they are made into integrated circuit module respectively, or a plurality of modules or acts thereof are made into one integrated circuit module. In this way, the disclosure is not restricted to any particular hardware and software combination.

The above description is only exemplary embodiments of the disclosure and is not intended to limit the disclosure, and the disclosure can have a variety of changes and modifications for those skilled in the art.

The invention is defined by the claims as appended.

### Industrial Applicability

As described above, by means of some embodiments and exemplary implementation, the problem that the EMS cannot identify the alarm correlated to a VNF instance and generated due to the virtual resource pool failure of the NFVI layer is solved. The effect that the EMS can explicitly identify the alarm correlated to a VNF instance and generated due to the virtual resource pool failure of the NFVI layer is achieved.

## Claims

1. An alarm processing method, comprising:
detecting, at an Network Functions Virtualization Infrastructure, NFVI, layer, that the NFVI layer has a virtual resource pool failure (S202);
when determining, at the NFVI layer, that the virtual resource pool failure is correlated to a Virtualized Network Function, VNF, instance (S204), generating, at the NFVI layer, the NFVI layer alarm (S206), wherein the NFVI layer alarm comprises identification information identifying that an alarm type of the NFVI layer alarm is a virtual resource pool alarm (S502);
sending, at the NFVI layer, the generated NFVI layer alarm to a Virtualized Infrastructure Manager entity, VIM (S208);
sending, by the VIM, the NFVI layer alarm to a Virtualized Network Function Manager entity, VNFM; and
reporting, by the VNFM, the NFVI layer alarm to an Element Management System, EMS; and
receiving, by the EMS, the NFVI layer alarm reported by the VNFM (S502).

2. The method as claimed in claim 1, wherein the virtual resource pool alarm comprises at least one of:
a hypervisor alarm, a virtual resource alarm or a physical resource alarm.

3. The method as claimed in claim 1 or 2,after receiving, by the EMS, the NFVI layer alarm reported by the VNFM, further comprising:
sending, by the EMS, the received NFVI layer alarm to a Network Management System, NMS (S504).

4. An alarm processing method, comprising:
receiving, by a Virtualized Infrastructure Manager entity, VIM, a Network Functions Virtualization Infrastructure, NFVI, layer alarm reported by an NFVI layer (S302);
when determining, by the VIM according to the NFVI layer alarm, that the NFVI layer alarm is correlated to a Virtualized Network Function, VNF, instance (S304), adding, by the VIM, identification information identifying that an alarm type of the NFVI layer alarm is a virtual resource pool alarm in the received NFVI layer alarm (S306), and sending, by the VIM, the NFVI layer alarm added with the identification information to a Virtualized Network Function Manager entity, VNFM (S308); or, when determining, by the VIM according to the NFVI layer alarm, that the NFVI layer alarm is correlated to a VNF instance, reporting, by the VIM, the NFVI layer alarm to the VNFM, and setting, by the VNFM, that an alarm type of the NFVI layer alarm is a virtual resource pool alarm; and
sending, by the VNFM entity, the NFVI layer alarm to an EMS.

5. The method as claimed in claim 4, wherein the virtual resource pool alarm comprises at least one of:
a hypervisor alarm, a virtual resource alarm or a physical resource alarm.

6. The method as claimed in claim 4 or 5, after sending, by the VNFM, the NFVI layer alarm to an Element Management System, EMS, further comprising:
sending, by the EMS, the received NFVI layer alarm to a Network Management System, NMS.

7. The method as claimed in claim 4 or 5, further comprising:
when determining that the NFVI layer alarm is not correlated to the VNF instance, reporting, by the VIM, the NFVI layer alarm to a Network Functions Virtualization Orchestrator, VFVO.

8. An alarm processing system, comprising a Network Functions Virtualization Infrastructure, NFVI, layer, a Virtualized Infrastructure Manager, VIM, a Virtualized Network Function Manager entity, VNFM, and an Element Management System, EMS, wherein the Network Functions Virtualization Infrastructure, NFVI, layer, is configured to detect that the NFVI layer has a virtual resource pool failure, when determining that the virtual resource pool failure is correlated to a Virtualized Network Function, VNF, instance, generate an NFVI layer alarm, wherein the NFVI layer alarm comprises identification information identifying that an alarm type of the NFVI layer alarm is a virtual resource pool alarm, and send the generated NFVI layer alarm to the Virtualized Infrastructure Manager entity, VIM;
the VIM, is configured to send the NFVI layer alarm to the Virtualized Network Function Manager entity, VNFM;
the VNFM, is configured to report the NFVI layer alarm to the Element Management System, EMS; and
the EMS, is configured to receive the NFVI layer alarm reported by the VNFM

9. The system as claimed in claim 8, wherein the virtual resource pool alarm comprises at least one of:
a hypervisor alarm, a virtual resource alarm or a physical resource alarm.

10. The system as claimed in claim 8 or 9, wherein the EMS is further configured to send the received NFVI layer alarm to a Network Management System, NMS.

11. An alarm processing system, comprising a Network Functions Virtualization Infrastructure, NFVI, layer, a Virtualized Infrastructure Manager, VIM, a Virtualized Network Function Manager entity, VNFM, and an Element Management System, EMS, wherein the Network Functions Virtualization Infrastructure, NFVI, layer, 2. is configured to report an NFVI layer alarm to the Virtualized Infrastructure Manager entity, VIM
the VIM, is configured to receive the NFVI layer alarm reported by the NFVI layer when determining, according to the NFVI layer alarm, that the NFVI layer alarm is correlated to a Virtualized Network Function, VNF, instance, add identification information identifying that an alarm type of the NFVI layer alarm is a virtual resource pool alarm in the received NFVI layer alarm, and send the NFVI layer alarm added with the identification information to the Virtualized Network Function Manager entity VNFM (S308);
the VNFM, is configured to send the NFVI layer alarm to the Element Management System, EMS; and
the EMS, is configured to receive the NFVI layer alarm reported by the VNFM

12. The system as claimed in claim 11, wherein the EMS is further configured to send the received NFVI layer alarm to a Network Management System, NMS..

13. An alarm processing system, comprising a Network Functions Virtualization Infrastructure, NFVI, layer, a Virtualized Infrastructure Manager, VIM, a Virtualized Network Function Manager entity, VNFM, and an Element Management System, EMS, wherein the Network Functions Virtualization Infrastructure, NFVI, layer, is configured to report an NFVI layer alarm to the Virtualized Infrastructure Manager entity, VIM
the VIM, is configured to receive the NFVI layer alarm reported by the NFVI layer when determining, according to the NFVI layer alarm, that the NFVI layer alarm is correlated to a Virtualized Network Function, VNF, instance, report the NFVI layer alarm to the VNFM;
the VNFM, is configured to set that an alarm type of the NFVI layer alarm is a virtual resource pool alarm, and send the NFVI layer alarm to the Element Management System, EMS; and
the EMS, is configured to receive the NFVI layer alarm reported by the VNFM

14. The system as claimed in claim 13, wherein the EMS is further configured to send the received NFVI layer alarm to a Network Management System, NMS.

15. The system as claimed in claim 13, wherein the VIM is further configured to, when determining that the NFVI layer alarm is not correlated to the VNF instance, report the NFVI layer alarm to a Network Functions Virtualization Orchestrator, VFVO.

## Patentansprüche

1. Alarmverarbeitungsverfahren, umfassend:
Erkennen, auf einer Netzwerkfunktionsvirtualisierungsinfrastruktur-, NFVI-, Schicht, dass die NFVI-Schicht einen Ausfall des virtuellen Ressourcenpools aufweist (S202);
wenn auf der NFVI-Schicht bestimmt wird, dass der Ausfall des virtuellen Ressourcenpools mit einer Instanz einer virtualisierten Netzwerkfunktion, VNF, korreliert (S204), Erzeugen des NFVI-Schicht-Alarms (S206) auf der NFVI-Schicht, wobei der NFVI-Schicht-Alarm Identifikationsinformationen umfasst, die identifizieren, dass ein Alarmtyp des NFVI-Schicht-Alarms ein Alarm des virtuellen Ressourcenpools ist (S502);
Senden, auf der NFVI-Schicht, des erzeugten NFVI-Schicht-Alarms an eine virtualisierte Infrastrukturverwaltungseinheit, VIM (S208);
Senden, durch die VIM, des NFVI-Schicht-Alarms an eine virtualisierte Netzwerkfunktionsverwaltungseinheit, VNFM; und
Melden, durch die VNFM, des NFVI-Schicht-Alarms an ein Elementverwaltungssystem, EMS; und
Empfangen, durch das EMS, des durch die VNFM gemeldeten NFVI-Schicht-Alarms (S502).

2. Verfahren nach Anspruch 1, wobei der Alarm des virtuellen Ressourcenpools mindestens eines der folgenden umfasst:
einen Hypervisor-Alarm, einen Alarm der virtuellen Ressourcen oder einen Alarm der physischen Ressourcen.

3. Verfahren nach Anspruch 1 oder 2, das nach dem Empfangen des durch die VNFM gemeldeten NFVI-Schicht-Alarms durch das EMS weiter Folgendes umfasst:
Senden, durch das EMS, des empfangenen NFVI-Schicht-Alarms an ein Netzwerkverwaltungssystem, NMS (S504).

4. Alarmverarbeitungsverfahren, umfassend:
Empfangen, durch eine virtualisierte Infrastrukturverwaltungseinheit, VIM, eines von einer NFVI-Schicht gemeldeten Netzwerkfunktionsvirtualisierungsinfrastruktur-, NFVI-, Schicht-Alarms (S302);
wenn durch die VIM gemäß dem NFVI-Schicht-Alarm bestimmt wird, dass der NFVI-Schicht-Alarm mit einer Instanz einer virtualisierten Netzwerkfunktion, VNF, korreliert (S304), Hinzufügen, durch die VIM, von Identifikationsinformationen, die identifizieren, dass ein Alarmtyp des NFVI-Schicht-Alarms ein Alarm des virtuellen Ressourcenpools in dem empfangenen NFVI-Schicht-Alarm ist (S306), und Senden, durch die VIM, des NFVI-Schicht-Alarms mit den hinzugefügten Identifikationsinformationen an eine virtualisierte Netzwerkfunktionsverwaltungseinheit, VNFM (S308); oder, wenn durch die VIM gemäß dem NFVI-Schicht-Alarm bestimmt wird, dass der NFVI-Schicht-Alarm mit einer VNF-Instanz korreliert, Melden, durch die VIM, des NFVI-Schicht-Alarms an die VNFM und Einstellen, durch die VNFM, dass ein Alarmtyp des NFVI-Schicht-Alarms ein Alarm des virtuellen Ressourcenpools ist; und
Senden, durch die Einheit VNFM, des NFVI-Schicht-Alarms an ein EMS.

5. Verfahren nach Anspruch 4, wobei der virtuelle Ressourcenpool-Alarm mindestens eines der folgenden umfasst:
einen Hypervisor-Alarm, einen Alarm der virtuellen Ressourcen oder einen Alarm der physischen Ressourcen.

6. Verfahren nach Anspruch 4 oder 5, das nach dem Senden des NFVI-Schicht-Alarms an ein Elementverwaltungssystem, EMS, durch das VNFM weiter Folgendes umfasst:
Senden, durch das EMS, des empfangenen NFVI-Schicht-Alarms an ein Netzwerkverwaltungssystem, NMS.

7. Verfahren nach Anspruch 4 oder 5, weiter umfassend:
wenn bestimmt wird, dass der NFVI-Schicht-Alarm nicht mit der VNF-Instanz korreliert, Melden, durch die VIM, des NFVI-Schicht-Alarms an einen Netzwerkfunktionsvirtualisierungsorchestrator, VFVO.

8. Alarmverarbeitungssystem, umfassend eine Netzwerkfunktionsvirtualisierungsinfrastruktur-, NFVI-, Schicht, eine virtualisierte Infrastrukturverwaltung, VIM, eine virtualisierte Netzwerkfunktionsverwaltungseinheit, VNFM, und ein Elementverwaltungssystem, EMS, wobei die Netzwerkfunktionsvirtualisierungsinfrastruktur-, NFVI-, Schicht, derart konfiguriert ist, dass sie erkennt, dass die NFVI-Schicht einen Ausfall des virtuellen Ressourcenpools aufweist, wenn bestimmt wird, dass der Ausfall des virtuellen Ressourcenpools mit einer virtualisierten Netzwerkfunktion-, VNF-, Instanz korreliert, Erzeugen eines NFVI-Schicht-Alarms, wobei der NFVI-Schicht-Alarm Identifikationsinformationen umfasst, die identifizieren, dass ein Alarmtyp des NFVI-Schicht-Alarms ein Alarm des virtuellen Ressourcenpools ist, und Senden des erzeugten NFVI-Schicht-Alarms an die virtualisierte Infrastrukturverwaltungseinheit, VIM; wobei die VIM derart konfiguriert ist, dass sie den NFVI-Schicht-Alarm an die virtualisierte Netzwerkfunktionsverwaltungseinheit, VNFM, sendet; wobei die VNFM derart konfiguriert ist, dass sie den NFVI-Schicht-Alarm an das Elementverwaltungssystem, EMS, meldet; und wobei das EMS derart konfiguriert ist, dass es den vom VNFM gemeldeten NFVI-Schicht-Alarm empfängt.

9. System nach Anspruch 8, wobei der Alarm des virtuellen Ressourcenpools mindestens eines der folgenden umfasst:
einen Hypervisor-Alarm, einen Alarm der virtuellen Ressourcen oder einen Alarm der physischen Ressourcen.

10. System nach Anspruch 8 oder 9, wobei das EMS weiter derart konfiguriert ist, dass es den empfangenen NFVI-Schicht-Alarm an ein Netzwerkverwaltungssystem, NMS, sendet.

11. Alarmverarbeitungssystem, umfassend eine Netzwerkfunktionsvirtualisierungsinfrastruktur-, NFVI-, Schicht, eine virtualisierte Infrastrukturverwaltung, VIM, eine virtualisierte Netzwerkfunktionsverwaltungseinheit, VNFM, und ein Elementverwaltungssystem, EMS, wobei die Netzwerkfunktionsvirtualisierungsinfrastruktur-, NFVI-, Schicht derart konfiguriert ist, dass sie einen Alarm der NFVI-Schicht an die virtualisierte Infrastrukturverwaltungseinheit, VIM, meldet; wobei die VIM derart konfiguriert ist, dass sie den durch die NFVI-Schicht gemeldeten NFVI-Schicht-Alarm empfängt, wenn gemäß dem NFVI-Schicht-Alarm bestimmt wird, dass der NFVI-Schicht-Alarm mit einer Instanz einer virtualisierten Netzwerkfunktion, VNF, korreliert, Identifikationsinformationen hinzufügt, die identifizieren, dass ein Alarmtyp des NFVI-Schicht-Alarms ein Alarm des virtuellen Ressourcenpools in dem empfangenen NFVI-Schicht-Alarm ist, und den NFVI-Schicht-Alarm mit den hinzugefügten Identifikationsinformationen an die virtualisierte Netzwerkfunktionsverwaltungseinheit VNFM sendet (S308); wobei die VNFM derart konfiguriert ist, dass sie den NFVI-Schicht-Alarm an das Elementverwaltungssystem, EMS, sendet; und wobei das EMS derart konfiguriert ist, dass es den durch die VNFM gemeldeten NFVI-Schicht-Alarm empfängt.

12. System nach Anspruch 11, wobei das EMS weiter derart konfiguriert ist, dass es den empfangenen NFVI-Schicht-Alarm an ein Netzwerkverwaltungssystem, NMS, sendet.

13. Alarmverarbeitungssystem, umfassend eine Netzwerkfunktionsvirtualisierungsinfrastruktur-, NFVI-, Schicht, eine virtualisierte Infrastrukturverwaltung, VIM, eine virtualisierte Netzwerkfunktionsverwaltungseinheit, VNFM, und ein Elementverwaltungssystem, EMS, wobei die Netzwerkfunktionsvirtualisierungsinfrastruktur-, NFVI-, Schicht derart konfiguriert ist, dass sie einen NFVI-Schicht-Alarm an die virtualisierte Infrastrukturverwaltungseinheit, VIM, meldet; wobei die VIM derart konfiguriert ist, dass sie den durch die NFVI-Schicht gemeldeten NFVI-Schicht-Alarm empfängt, wenn gemäß dem NFVI-Schicht-Alarm bestimmt wird, dass der NFVI-Schicht-Alarm mit einer Instanz der virtualisierten Netzwerkfunktion, VNF, korreliert, den NFVI-Schicht-Alarm an die VNFM meldet; wobei die VNFM derart konfiguriert ist, dass sie einstellt, dass ein Alarmtyp des NFVI-Schicht-Alarms ein Alarm des virtuellen Ressourcenpools ist, und den NFVI-Schicht-Alarm an das Elementverwaltungssystem, EMS, sendet; und wobei das EMS derart konfiguriert ist, dass es den durch die VNFM gemeldeten NFVI-Schicht-Alarm empfängt.

14. System nach Anspruch 13, wobei das EMS weiter derart konfiguriert ist, dass es den empfangenen NFVI-Schicht-Alarm an ein Netzwerkverwaltungssystem, NMS, sendet.

15. System nach Anspruch 13, wobei die VIM weiter derart konfiguriert ist, dass sie, wenn bestimmt wird, dass der NFVI-Schicht-Alarm nicht mit der Instanz der VNF korreliert, den NFVI-Schicht-Alarm an einen Netzwerkfunktionsvirtualisierungsorchestrator, VFVO, meldet.

## Revendications

1. Procédé de traitement d'alarme comprenant :
la détection, au niveau d'une couche d'infrastructure de virtualisation de fonctions de réseau, NFVI, que la couche de NFVI présente une défaillance de groupe de ressources virtuelles (S202) ;
lors de la détermination, au niveau de la couche de NFVI, que la défaillance du groupe de ressources virtuelles est corrélée à une instance de fonction de réseau virtualisé, VNF (S204), la production, au niveau de la couche de NFVI, de l'alarme de couche de NFVI (S206), dans lequel l'alarme de couche de NFVI comprend des informations d'identification identifiant qu'un type d'alarme de l'alarme de couche de NFVI est une alarme de groupe de ressources virtuelles (S502) ;
l'envoi, au niveau de la couche de NFVI, de l'alarme de couche de NFVI générée à une entité de gestionnaire d'infrastructure virtualisée, VIM (S208) ;
l'envoi, par le VIM, de l'alarme de couche de NFVI à une entité de gestionnaire de fonction de réseau virtualisé, VNFM ; et
le signalement, par le VNFM, de l'alarme de couche de NFVI à un système de gestion d'éléments, EMS ; et
la réception, par l'EMS, de l'alarme de couche de NFVI signalée par le VNFM (S502).

2. Procédé selon la revendication 1, dans lequel l'alarme de groupe de ressources virtuelles comprend au moins un élément parmi :
une alarme d'hyperviseur, une alarme de ressources virtuelles ou une alarme de ressources physiques.

3. Procédé selon la revendication 1 ou 2 comprenant en outre, après réception par l'EMS de l'alarme de couche de NFVI signalée par le VNFM :
l'envoi, par l'EMS, de l'alarme de couche de NFVI reçue à un système de gestion de réseau, NMS (S504).

4. Procédé de traitement d'alarme comprenant :
la réception, par une entité de gestionnaire d'infrastructure virtualisée, VIM, d'une alarme de couche d'infrastructure de virtualisation de fonctions de réseau, NFVI, signalée par une couche de NFVI (S302) ;
lors de la détermination, par le VIM selon l'alarme de couche de NFVI, que l'alarme de couche de NFVI est corrélée à une instance de fonction de réseau virtualisé, VNF (S304), l'ajout, par le VIM, d'informations d'identification identifiant qu'un type d'alarme de l'alarme de couche de NFVI est une alarme de groupe de ressources virtuelles dans l'alarme de couche de NFVI reçue (S306) et l'envoi, par le VIM, de l'alarme de couche de NFVI ajoutée aux informations d'identification à une entité de gestionnaire de fonction de réseau virtualisé, VNFM (S308) ; ou, lors de la détermination, par le VIM selon l'alarme de couche de NFVI, que l'alarme de couche de NFVI est corrélée à une instance de VNF, le signalement, par le VIM, de l'alarme de couche de NFVI au VNFM et l'établissement, par le VNFM, qu'un type d'alarme de l'alarme de couche de NFVI est une alarme de groupe de ressources virtuelles ; et
l'envoi, par l'entité de VNFM, de l'alarme de couche de NFVI à un EMS.

5. Procédé selon la revendication 4, dans lequel l'alarme de groupe de ressources virtuelles comprend au moins un élément parmi :
une alarme d'hyperviseur, une alarme de ressources virtuelles ou une alarme de ressources physiques.

6. Procédé selon la revendication 4 ou 5 qui, après l'envoi, par le VNFM, de l'alarme de couche de NFVI à un système de gestion d'éléments, EMS, comprend en outre :
l'envoi, par l'EMS, de l'alarme de couche de NFVI reçue à un système de gestion de réseau, NMS.

7. Procédé selon la revendication 4 ou 5, comprenant en outre :
lors de la détermination que l'alarme de couche de NFVI n'est pas corrélée à l'instance de VNF, le signalement, par le VIM, de l'alarme de couche de NFVI à un orchestrateur de virtualisation de fonctions de réseau, VFVO.

8. Système de traitement d'alarme, comprenant une couche d'infrastructure de virtualisation de fonctions de réseau, NFVI, un gestionnaire d'infrastructure virtualisée, VIM, une entité de gestionnaire de fonction de réseau virtualisé, VNFM, et un système de gestion d'éléments, EMS, dans lequel la couche d'infrastructure de virtualisation de fonctions de réseau, NFVI, est configurée pour détecter que la couche de NFVI rencontre une défaillance de groupe de ressources virtuelles, lors de la détermination que la défaillance de groupe de ressources virtuelles est corrélée à une instance de fonction de réseau virtualisé, VNF, pour générer une alarme de couche de NFVI, dans lequel l'alarme de couche de NFVI comprend des informations d'identification identifiant qu'un type d'alarme de l'alarme de couche de NFVI est une alarme de groupe de ressources virtuelles et pour envoyer l'alarme de couche de NFVI générée à l'entité de gestionnaire d'infrastructure virtualisée, VIM ; le VIM est configuré pour envoyer l'alarme de couche de NFVI à l'entité de gestionnaire de fonction de réseau virtualisé, VNFM ; le VNFM est configuré pour signaler l'alarme de couche de NFVI au système de gestion d'éléments, EMS ; et l'EMS est configuré pour recevoir l'alarme de couche de NFVI signalée par le VNFM.

9. Système selon la revendication 8, dans lequel l'alarme de groupe de ressources virtuelles comprend au moins l'un des éléments suivants :
une alarme d'hyperviseur, une alarme de ressources virtuelles ou une alarme de ressources physiques.

10. Système selon la revendication 8 ou 9, dans lequel l'EMS est en outre configuré pour envoyer l'alarme de couche de NFVI reçue à un système de gestion de réseau, NMS.

11. Système de traitement d'alarme, comprenant une couche d'infrastructure de virtualisation de fonctions de réseau, NFVI, un gestionnaire d'infrastructure virtualisée, VIM, une entité de gestionnaire de fonction de réseau virtualisé, VNFM, et un système de gestion d'éléments, EMS, dans lequel la couche d'infrastructure de virtualisation de fonctions de réseau, NFVI, est configurée pour signaler une alarme de couche de NFVI à l'entité de gestionnaire d'infrastructure virtualisée, VIM ; le VIM est configuré pour recevoir l'alarme de couche de NFVI signalée par la couche de NFVI lors de la détermination, selon l'alarme de couche de NFVI, que l'alarme de couche de NFVI est corrélée à une instance de fonction de réseau virtualisé, VNF, pour ajouter des informations d'identification identifiant qu'un type d'alarme de l'alarme de couche de NFVI est une alarme de groupe de ressources virtuelles dans l'alarme de couche de NFVI reçue et pour envoyer l'alarme de couche de NFVI ajoutée aux informations d'identification à l'entité de gestionnaire de fonction de réseau virtualisé, VNFM (S308) ; le VNFM est configuré pour envoyer l'alarme de couche de NFVI au système de gestion d'éléments, EMS ; et l'EMS est configuré pour recevoir l'alarme de couche de NFVI signalée par le VNFM.

12. Système selon la revendication 11, dans lequel l'EMS est en outre configuré pour envoyer l'alarme de couche de NFVI reçue à un système de gestion de réseau, NMS.

13. Système de traitement d'alarme, comprenant une couche d'infrastructure de virtualisation de fonctions de réseau, NFVI, un gestionnaire d'infrastructure virtualisée, VIM, une entité de gestionnaire de fonction de réseau virtualisé, VNFM, et un système de gestion d'éléments, EMS, dans lequel la couche d'infrastructure de virtualisation de fonctions de réseau, NFVI, est configurée pour signaler une alarme de couche de NFVI à l'entité de gestionnaire d'infrastructure virtualisée, VIM ; le VIM est configuré pour recevoir l'alarme de couche de NFVI signalée par la couche de NFVI lors de la détermination, selon l'alarme de couche de NFVI, que l'alarme de couche de NFVI est corrélée à une instance de fonction de réseau virtualisé, VNF, pour signaler l'alarme de couche de NFVI au VNFM ; le VNFM est configuré pour définir qu'un type d'alarme de l'alarme de couche de NFVI est une alarme de groupe de ressources virtuelles et pour envoyer l'alarme de couche de NFVI au système de gestion d'éléments, EMS ; et l'EMS est configuré pour recevoir l'alarme de couche de NFVI signalée par le VNFM.

14. Système selon la revendication 13, dans lequel l'EMS est en outre configuré pour envoyer l'alarme de couche de NFVI reçue à un système de gestion de réseau, NMS.

15. Système selon la revendication 13, dans lequel le VIM est en outre configuré, lors de la détermination que l'alarme de couche de NFVI n'est pas corrélée à l'instance de VNF, pour signaler l'alarme de couche de NFVI à un orchestrateur de virtualisation de fonctions de réseau, VFVO.
